# DEMANDE DE BREVET EUROPEEN

(11) **EP 3 166 181 A1**
(43) Date de publication de la demande: **10.05.2017**
(21) Numéro de dépôt: 15306758.2
(22) Date de dépôt: 05.11.2015
(51) Int. Cl.: H01Q 7/06, G06K 19/077

(54) **PROCEDE DE FABRICATION D'ANTENNE RADIOFREQUENCE SUR UN SUPPORT ET ANTENNE AINSI OBTENUE**

(71) Demandeur: GEMALTO SA, 92190 Meudon (FR)
(72) Inventeur: BUYUKKALENDER, Arek, 13881 GEMENOS Cedex (FR); MERIDIANO, Jean-Luc, 13881 GEMENOS Cedex (FR); MENDEZ, Lucile, 13881 GEMENOS Cedex (FR); SEBAN, Frédérick, 13881 GEMENOS Cedex (FR)
(74) Mandataire: Milharo, Emilien

(57) **Abrégé**

L'invention concerne un procédé de fabrication d'une antenne (13) pour transpondeur radiofréquence, ladite antenne comprenant une spirale comportant des spires (S1-S4) s'étendant au moins en partie sur un substrat isolant (12) ;

Le procédé se caractérise en ce qu'il comprend l'étape selon laquelle on dépose au moins une première portion (13i) de chaque spire (S1-S4) sur ledit substrat (12) à un premier niveau P1 de plan, au moins une seconde portion 13b de chaque spire étant formée ou maintenue à distance (e) du premier niveau de plan (P1) du substrat, l'axe (SX) de la spirale étant parallèle au plan (P1) du substrat.

L'invention concerne également un objet portable électronique comportant de manière fixe ou amovible l'antenne obtenue.

## Description

### Domaine de l'invention.

L'invention concerne un procédé de fabrication d'antenne radiofréquence sur un support et l'antenne ainsi obtenue.

Elle concerne de préférence la fabrication d'antenne sur un support dont la configuration permet d'avoir un champ d'action comprenant l'émission et/ou la réception d'onde électromagnétique principalement orientée dans le plan d'un support d'antenne.

L'invention vise également la fabrication de support d'antenne(s) dont le champ d'action peut être tridimensionnel.

L'invention concerne plus particulièrement le domaine des supports d'antenne radiofréquence tels que des passeports électroniques, documents de voyage, carte à puce, tickets, étiquettes radiofréquences, des transpondeurs radiofréquences, insert (ou inlay).

De tels objets peuvent être conformes notamment au standard ISO / IEC 14443.

### Art antérieur.

Dans l'industrie de la carte à puce sans-contact ou RFID (radiofrequency identity device), il est connu de réaliser une antenne radiofréquence sous forme de spires ou pistes électriquement conductrices sur un support. Les spires ou pistes d'antenne peuvent être notamment réalisées par gravure de métal sur un support ou par incrustation de fils conducteurs notamment par ultrasons ou tout autre dépôt de métal conducteur. L'antenne est ensuite connectée à un module radiofréquence comprenant une puce de circuit intégré radiofréquence.

Selon la forme de l'antenne, on peut obtenir ainsi des transpondeurs radiofréquences pouvant opérer selon les normes ISO 14443 ou norme UHF.

### Problème technique.

Les supports à puce radiofréquence connus dans le domaine de la carte à puce peuvent présenter des champs d'action réduits selon la manière dont est présenté le support par rapport à l'antenne d'un lecteur radiofréquence de proximité. Ainsi, par exemple une carte à puce ou ticket de transport RFID doit être présentée à plat en face d'un lecteur radiofréquence pour assurer un bon couplage et une bonne communication avec ce lecteur. Toute autre orientation de la carte ne permet pas d'assurer un couplage aussi rapidement.

L'invention vise en général un procédé économique de fabrication d'antenne qui permette une communication radiofréquence quelle que soit l'orientation de son support par rapport à un lecteur radiofréquence.

L'invention a pour objectif particulier de proposer une structure économique (ou facile à réaliser) de transpondeur radiofréquence comprenant une antenne sur un support et dont le champ d'action du transpondeur pallie l'insuffisance de champ d'action des cartes sans contact à champ proche actuelles conformes notamment à l'ISO 14433.

Par champ proche, on entend un champ dont la portée de communication est par exemple inférieure à environ 1 m.

### Résumé de l'invention.

L'invention consiste à réaliser une antenne en forme de spirale sur un substrat plan, de préférence à l'aide de technologie courante dans le domaine de la carte à puce, l'axe de la spirale étant sensiblement dans le plan du substrat (ou parallèle à ce plan) de manière à avoir un champ d'action de l'antenne dans cet axe.

L'invention a donc pour objet un procédé de fabrication d'une antenne pour transpondeur radiofréquence, ladite antenne comprenant une spirale comportant des spires s'étendant au moins en partie sur un substrat isolant,
caractérisé en ce qu'il comprend l'étape selon laquelle on dépose au moins une première portion de chaque spire sur ledit substrat à un premier niveau P1 de plan, au moins une seconde portion de chaque spire étant formée à distance du premier niveau de plan du substrat, l'axe de la spirale étant parallèle au plan du substrat.

Selon d'autres caractéristiques de l'invention :
- La première portion de chaque spire est réalisée à partir de fil conducteur ;
- Chaque spire comprend un segment incrusté dans ledit substrat et une alternance non incrustée dans ledit substrat, ladite alternance étant relative au segment incrusté ;
- L'alternance non incrustée s'étend au dessus du plan du substrat en formant une boucle. La boucle peut être plus ou moins arrondie ou sensiblement plate ;
- L'alternance est formée sur un second substrat distinct du premier et le second substrat est assemblé au premier substrat de manière à relier électriquement la première portion de chaque spire à la seconde portion ou alternance de chaque spire ;
- La première portion de chaque spire comprend une première plage terminale d'interconnexion à chaque extrémité pour interconnecter une seconde plage terminale d'interconnexion correspondante de la seconde portion ou alternance de spire lors de l'assemblage des deux substrats ;

L'invention a également pour objet une antenne obtenue par le procédé et un objet portable électronique comportant ladite antenne de manière fixe ou amovible ;

L'objet portable électronique peut constituer un passeport, un livret, une carte à puce, une carte à puce au format mini-carte, un téléphone portable ou tablette, un ordinateur comportant l'antenne sur son circuit imprimé ou de manière amovible.

### Brève description des figures.

- La figure 1 illustre une carte à puce sans contact de l'art antérieur ;
- La figure 2 illustre une antenne conforme à un premier mode de réalisation de l'invention et obtenue selon un premier mode de mise en oeuvre du procédé ;
- Les figures 3-6A illustrent des étapes de mise en oeuvre du procédé de l'invention selon un second mode de mise en oeuvre et l'antenne obtenue ;
- La figure 7 illustre schématiquement une coupe de la figure 2 ;
- La figure 8 illustre l'objet de la figure précédente combiné à une antenne 3 de l'art antérieur.

### Description

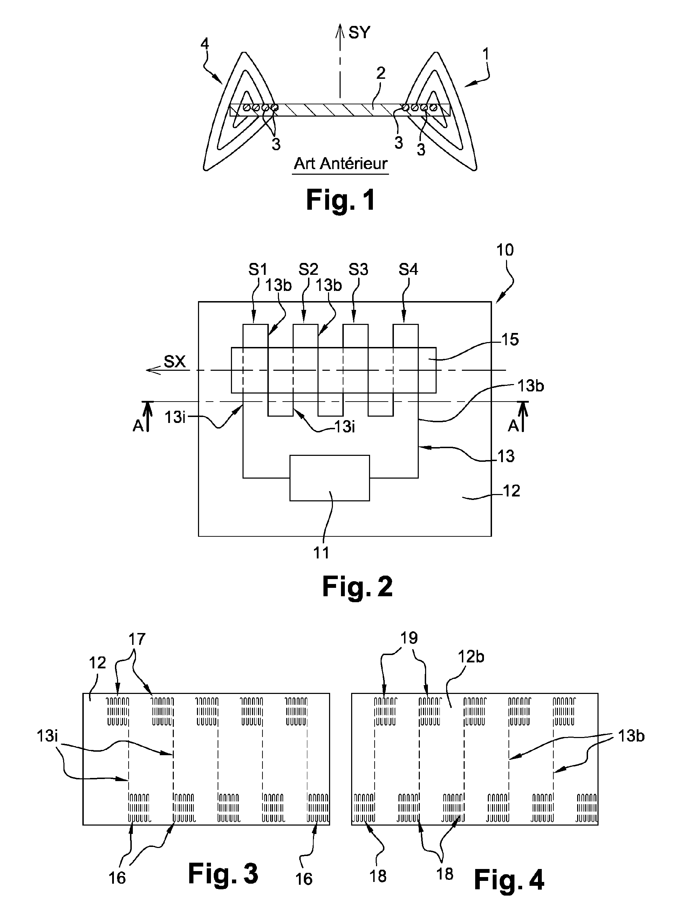

La figure 1 illustre une carte à puce sans contact 1 de l'art antérieur. Elle comprend un support plan 2 sur lequel est réalisée une antenne en fil incrusté, sous forme de spirale comportant des spires 3. Le champ d'action de cette spirale en couplage ou en émission et/ou réception est orienté suivant l'axe SY perpendiculaire au plan de la carte.

Selon l'art antérieur, il est nécessaire de présenter une des faces principales de la carte sensiblement en regard d'une antenne de lecteur pour permettre un bon couplage et une bonne communication radiofréquence selon le standard ISO 14443.

Toute autre orientation de la carte peut ne pas assurer le couplage électromagnétique nécessaire.

A la figure 2 on voit une configuration d'antenne 13 pour transpondeur radiofréquence selon un premier mode de réalisation de l'invention. L'antenne comprend une spirale comportant des spires S1-S4 qui s'étendent au moins en partie sur un substrat isolant 12.

Le substrat peut être de toute nature isolante par exemple en plastique PET, PVC, PE, Teslin, tissu synthétique, non tissé.

Selon une caractéristique du premier mode, le procédé pour la fabrication de cette antenne 13 met en oeuvre une étape de dépôt d'au moins une première portion 13i de chaque spire S1-S4 sur le substrat 12 et ce à un premier niveau P1 de plan sur le substrat.

En cas de gravure, l'antenne repose en surface du substrat, par contre en cas de fil incrusté, les spires peuvent être plus ou moins enfoncées par rapport à la surface principale du substrat. L'antenne peut être réalisée sous forme de fil cousu, brodé ou fil collé en surface du substrat. Ainsi, il peut avoir des plans P1 correspondant à des premières portions de spire de spirale.

En outre, le procédé prévoit de réaliser ou de maintenir au moins une seconde portion 13b de chaque spire S1-S4 à distance du premier niveau de plan P1 du substrat. L'antenne ainsi agencée présente un axe principal SX de la spirale parallèle au plan P1 du substrat au voisinage de la surface du substrat.

Dans l'exemple on préfère réaliser uniquement la première portion 13i de chaque spire S1-S4 à partir de fil conducteur incrusté notamment pour les bonnes performances radiofréquences et la précision de mise en oeuvre.

On peut observer que chaque spire S1-S4 comprend un segment incrusté 13i dans le substrat 12 et une alternance 13b relative au segment 13i (qui revient en sens contraire par rapport au parcours du segment). Cette alternance 13b est ici volontairement non incrustée dans ce substrat 12 pour les raisons ci-après d'obtention de boucle de spire.

En effet, selon une caractéristique avantageuse, l'alternance non incrustée 13b s'étend au dessus du plan P1 du substrat 12 et permet de former une boucle au dessus du plan du substrat et s'enfonçant dans le substrat ou adhérant à lui. Les segments 13i passent sous le noyau 15.

Sur les figures 3-6A, le procédé de l'invention, selon un second mode de mise en oeuvre, prévoit une étape selon laquelle l'alternance 13b est formée sur un second substrat 12b (fig.4).

Il prévoit aussi une autre étape selon laquelle le second substrat 12b est assemblé au premier substrat 12 de manière à relier électriquement la première portion 13i de chaque spire S1-S4 à la seconde portion ou alternance 13b de chaque spire.

Dans l'exemple à la figure 3, on réalise tout d'abord, notamment par incrustation de fil conducteur, une pluralité de motifs M1 : 13i, 16, 17 qui représentent des premières portions 13i de spire. On réalise ici des moitiés de spire. Ces portions 13i comprennent chacune des plages terminales d'interconnexion 16, 17 à leurs extrémités respectives. Ces plages d'interconnexion sont ici formées par des zigzags serrés et courts de fil incrusté.

D'autres réalisations de plages d'interconnexion et/ou de portions 13i sont possibles : notamment plaque de métal soudée, plages gravées, plages sérigraphiées, plages imprimées... selon une technologie identique ou non à celle utilisée pour réaliser les portions de spire ou pistes 13i.

A la figure 4, on réalise notamment par le(s) même(s) procédé(s) que précédemment ou selon un procédé différent, des motifs similaires et correspondants aux motifs précédents. Ces motifs M2 : 13b, 18, 19 sont complémentaires aux motifs M1. Ils comprennent des alternances ou secondes portions de spire complémentaires aux portions ou pistes 13i et plages 18, 19 à leurs extrémités respectives.

Ainsi, on réalise ces portions de spire de manière que la première portion 13i de chaque spire S1-S4 comprenne une première plage terminale d'interconnexion 16, 17 à chaque extrémité pour interconnecter une seconde plage terminale d'interconnexion 18, 19 correspondante de la seconde portion ou alternance 13b de spire lors de l'assemblage des deux substrats 12, 12b.

L'interconnexion électrique entre les plages d'interconnexion 16, 17, 18, 19 peut s'effectuer par conduction électrique ou par effet capacitif.

Dans le premier cas le fil est isolé par une gaine isolante et il suffit d'abraser les plages d'interconnexion mécaniquement ou par laser avant interconnexion par contact électrique.

Le cas échéant, on peut disposer une matière conductrice adhésive entre les plages conductrices à interconnecter. Pour l'interconnexion capacitive, il suffit d'assembler les substrats 12 et 12b en ayant les plages en regard de leur plage correspondante et de placer entre les deux une couche de colle plus ou moins épaisse selon la valeur de capacité à utiliser.

Selon une caractéristique, le procédé peut prévoir une étape de placement d'un noyau 15 pour concentrer le flux électromagnétique de la spirale. Ce noyau est disposé sensiblement dans l'axe SX de la spirale, entre les première 13i et seconde portions 13b de chaque spire S1-S4.

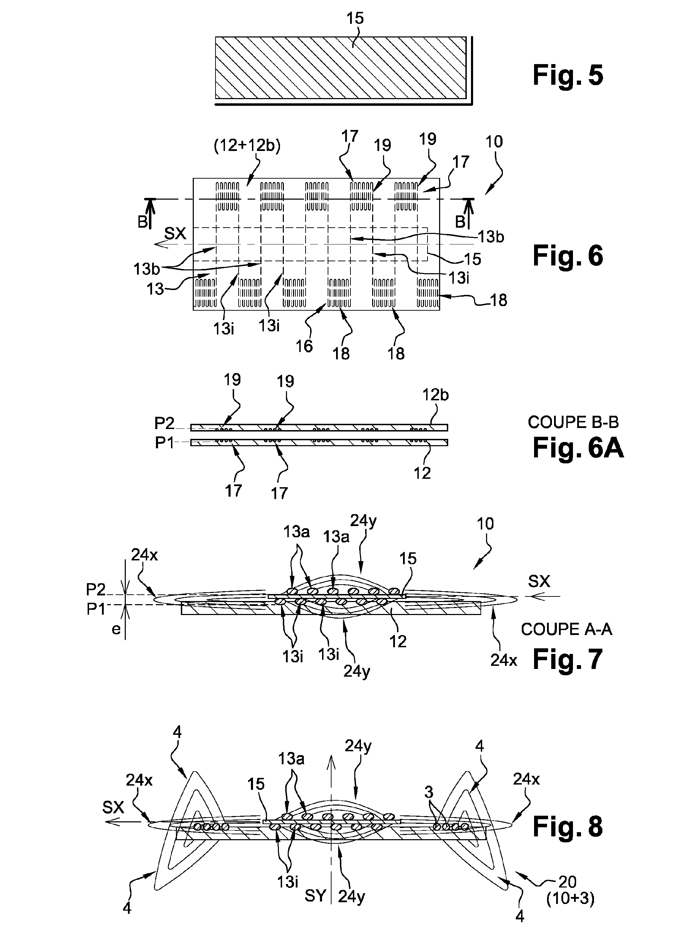

Ainsi, pour le premier mode (fig. 2), il suffit de glisser le noyau 15 (fig. 5) sous les alternances 13b en prenant soin de les soulever suffisamment, le cas échéant.

Le procédé peut prévoir de former les boucles 13i avec plus ou moins de hauteur par rapport au plan du substrat pour faciliter le placement du noyau par glissement dessous.

Pour le second mode, on peut procéder en plaçant le noyau sous forme d'une plaque fine sur le premier substrat 12 centré sur un axe au milieu des motifs M1.

Ensuite on place le substrat de la figure 4 sur le substrat 12 de la figure 3 de manière à couvrir le noyau et faire interconnecter chaque plage 16, 17 avec une plage correspondante 18, 19 de chaque motif M2.

Au préalable avant lamination ou assemblage, on peut enduire l'un au moins des substrats de colle intermédiaire anisotropique dans le cas d'une interconnexion par conduction électrique, qui peut être placée au niveau des plages conductrices. Une couche de colle normale peut être placée ailleurs.

A la figure 6A, est illustrée une coupe de la figure 6 selon B-B avant lamination des substrats 12 et 12b. On voit que chaque plage d'interconnexion est disposée à l'aplomb de sa plage correspondante.

L'exemple illustre des substrats comprenant une seule antenne mais on peut envisager d'assembler des substrats de grandes dimensions comprenant une pluralité d'antennes que l'on sépare ensuite par découpe.

Le procédé peut aussi être réalisé (mode non illustré) par bobine (Reel to reel) selon la technologie utilisée pour des modules de carte à puce.

Ainsi, on peut laminer ensemble un premier ruban R1 comportant les premiers motifs M1 puis laminer un ruban comportant le noyau ou simplement le noyau continu ou non reporté par transfert avec un film support détachable du noyau.

Ensuite, on lamine un second ruban R2 (ou 12b) par dessus l'ensemble comprenant le premier ruban R1 (ou 12) et le noyau (s'il est nécessaire).

Ensuite on procède à la découpe de chaque antenne réalisée ainsi sous forme de module antenne à action parallèle au plan principal du module.

Le module antenne à action parallèle peut ensuite être placé sur un autre substrat tel qu'un corps de carte à puce.

Ce module peut être connecté comme tout module sans contact connu de l'art antérieur à une autre antenne classique (à rayonnement perpendiculaire au plan principal). Par exemple, la connexion aux extrémités de l'antenne du module ou spirale du module peut être effectuée par thermo compression à un circuit présent sur l'autre substrat. Le circuit sur la figure 8 est une autre antenne réalisée par fil incrusté. Le montage des deux antennes peut être en série ou parallèle par rapport à une puce radiofréquence connectée à l'antenne.

La puce peut le cas échéant être connectée sur le module à antenne ci-dessus.

Le module à antenne peut être assemblé dans un corps de carte à puce notamment par encartage dans une cavité débouchant en surface du corps de carte. La connexion à l'autre antenne du corps de carte peut être effectuée au cours de l'encartage.

Le module peut avoir les dimensions d'un module classique conforme à l'ISO 7816 et comprendre des plages de contacts en surface par exemple sur une des faces externes de l'assemblage de la figure 6 ou 7.

Des couches isolantes (ou un enrobage isolant de la puce) peuvent être le cas échéant ajoutées sur une des faces ou sur la puce 11. La puce peut être montée en flip -chip (puce retournée). La figure 2 peut représenter le verso d'un module antenne de petites dimensions destiné ou non à être encarté dans un corps de carte.

A la figure 8, le procédé prévoit d'associer l'antenne de l'invention à une antenne classique 3 de l'art antérieur de la figure 1 à l'antenne de l'invention. Dans cette configuration, le transpondeur présente deux axes SX et SY préférentiels de couplage électromagnétique.

Cette réalisation, illustrée à la figure 8, a l'avantage de permettre une réalisation de deux types d'antennes à rayonnement complémentaire sur un même substrat notamment par technologie de fil incrusté. Ainsi, cette réalisation est particulièrement économique et pratique dans la mise en oeuvre tout en permettant de très bonnes performances radiofréquences.

Il est désormais possible de présenter devant un lecteur radiofréquence ISO 14443, une carte à puce comprenant un insert conforme à la figure 8 en mettant une de ses tranches en regard du lecteur (notamment les tranches de carte à puce perpendiculaires à l'axe de bobine ou spirale 13).

De préférence, les deux antennes sont connectées à la même puce radiofréquence. Le montage électrique des deux antennes peut être un montage en série ou en parallèle.

Les différents montages électriques peuvent requérir une capacité sous forme de plaques ou de composants SMD de circuit intégré pour compléter ou non une valeur de capacité de la puce radiofréquence ou puce hybride (contact et sans contact).

Le cas échéant on peut utiliser l'effet capacitif évoqué à la figure 6 pour accorder le montage d'antenne.

Ainsi, avec un même support à transpondeur radiofréquence conforme à la figure 8, par exemple une carte à puce sans contact, l'invention permet un meilleur couplage et une meilleure communication dans toutes les directions.

Grâce à l'invention, on peut concevoir un objet portable électronique quelconque comportant l'antenne de manière fixe ou amovible. Un tel objet ou dispositif peut constituer un passeport, un livret, une carte à puce, une carte à puce au format mini-carte.

L'antenne de l'invention peut équiper un téléphone portable, tablette, un ordinateur, tout dispositif de communication radiofréquence de l'invention notamment directement sur le circuit imprimé d'une carte mère de dispositif ou sous forme amovible via une carte à mémoire amovible ou autre.

## Revendications

1. Procédé de fabrication d'une antenne (13) pour transpondeur radiofréquence, ladite antenne comprenant une spirale comportant des spires (S1-S4) s'étendant au moins en partie sur un substrat isolant (12),
**caractérisé en ce qu'**il comprend l'étape selon laquelle on dépose au moins une première portion (13i) de chaque spire (S1-S4) sur ledit substrat (12) à un premier niveau P1 de plan, au moins une seconde portion 13b de chaque spire étant formée ou maintenue à distance (e) du premier niveau de plan (P1) du substrat, l'axe (SX) de la spirale étant parallèle au plan (P1) du substrat.

2. Procédé selon la revendication précédente, **caractérisé en ce que** ladite première portion (13i) de chaque spire (S1-S4) est réalisée à partir de fil conducteur.

3. Procédé selon la revendication précédente, **caractérisé en ce que** chaque spire (S1-S4) comprend un segment incrusté (13i) dans ledit substrat (12) et une alternance non incrustée (13b) dans ledit substrat (12), ladite alternance (13b) étant relative au segment (13i).

4. Procédé selon la revendication précédente, **caractérisé en ce que** l'alternance non incrustée (13b) s'étend au dessus du plan (P1) du substrat (12) en formant une boucle.

5. Procédé selon l'une quelconque des revendications précédentes, **caractérisé en ce que** ladite alternance (13b) est formée sur un second substrat (12b) et **en ce que** le second substrat est assemblé au premier substrat (12) de manière à relier électriquement la première portion (13i) de chaque spire (S1-S4) à la seconde portion ou alternance (13b) de chaque spire.

6. Procédé selon la revendication précédente, **caractérisé en ce que** ladite première portion (13i) de chaque spire (S1-S4) comprend une première plage terminale d'interconnexion (16, 17) à chaque extrémité pour interconnecter une seconde plage terminale d'interconnexion (18, 19) correspondante de la seconde portion ou alternance (13b) de spire lors de l'assemblage des deux substrats (12, 12b).

7. Procédé selon la revendication précédente, **caractérisé en ce que** l'interconnexion électrique entre lesdites plages d'interconnexion (16, 17, 18, 19) s'effectuent par conduction électrique ou par effet capacitif.

8. Procédé selon l'une quelconque des revendications précédentes, **caractérisé en ce qu'**il comprend une étape de placement d'un noyau (15) concentrateur de flux électromagnétique disposé sensiblement dans l'axe (SX) de la spirale, entre lesdites première (13i) et seconde portions (13b) de chaque spire (S1-S4).

9. Antenne 13 pour transpondeur radiofréquence 10, 20, ladite antenne formant une spirale 13 comportant des spires S1-S4 s'étendant au moins en partie sur un substrat isolant 12,
**caractérisé en ce qu'**il comprend :
- au moins une première portion 13i de chaque spire disposée sur ledit substrat isolant à un premier niveau P1 de plan,
- au moins une seconde portion 13b de chaque spire étant formée ou maintenue à distance (e) du premier niveau P1 du substrat, l'axe SX de la spirale étant parallèle au plan du substrat.

10. Objet portable électronique comportant l'antenne selon la revendication précédente de manière fixe ou amovible.

11. Objet portable électronique selon la revendication 10 constituant un passeport, un livret, une carte à puce, une carte à puce au format mini-carte, un téléphone portable ou tablette, un ordinateur comportant l'antenne sur son circuit imprimé ou de manière amovible.
